# EUROPEAN PATENT SPECIFICATION

(11) **EP 4 470 157 B1**
(45) Date of publication and mention of the grant of the patent: **27.08.2025**
(21) Application number: 22706235.3
(22) Date of filing: 28.01.2022
(51) Int. Cl.: H04L 9/40

(54) **COMMUNICATION DEVICE AND METHOD THEREIN FOR FACILITATING IKE COMMUNICATIONS**
KOMMUNIKATIONSVORRICHTUNG UND VERFAHREN DARIN ZUR ERMÖGLICHUNG VON IKE-KOMMUNIKATION
DISPOSITIF DE COMMUNICATION ET PROCÉDÉ EN SON SEIN POUR FACILITER DES COMMUNICATIONS IKE

(43) Date of publication of application: 04.12.2024
(73) Proprietor: Telefonaktiebolaget LM Ericsson (publ), 164 83 Stockholm (SE)
(72) Inventor: MIGAULT, Daniel, Montreal Quebec (CA); LIU, Daiying, Beijing 100102 (CN)
(74) Representative: Ericsson
(86) International application number: PCT/CN2022/074626
(87) International publication number: WO 2023/141946

(56) References cited:
- US-A1- 2003 237 003
- US-A1- 2007 157 305
- KAUFMAN ET AL: "Internet Key Exchange Protocol Version 2 (IKEv2)", INTERNET ENGINEERING TASK FORCE, IETF, 25 October 2014 (2014-10-25), RFC 7296, XP015104486

## Description

### TECHNICAL FIELD

The present disclosure relates to communication technology, and more particularly, to a communication device and method therein for facilitating Internet Key Exchange (IKE) communications.

### BACKGROUND

The Internet Engineering Task Force (IETF) Request for Comments (RFC) 7296, Internet Key Exchange Protocol Version 2 (IKEv2), which is incorporated herein by reference in its entirety, describes version 2 of the Internet Key Exchange (IKE) protocol. IKE is a component of Internet Protocol (IP) Security (IPsec) used for performing mutual authentication and establishing and maintaining Security Associations (SAs).

IPsec provides confidentiality, data integrity, access control, and data source authentication to IP datagrams. These services are provided by maintaining shared state between the source and the sink of an IP datagram. This state defines, among other things, the specific services provided to the datagram, which cryptographic algorithms will be used to provide the services, and the keys used as input to the cryptographic algorithms.

IKE performs mutual authentication between two parties and establishes an IKE Security Association (SA) that includes shared secret information that can be used to efficiently establish SAs (referred to as child SAs) for Encapsulating Security Payload (ESP) or Authentication Header (AH) and a set of cryptographic algorithms to be used by the SAs to protect the traffic that they carry.

Communication using IKE always begins with IKE SA Initiation (IKE_SA_INIT) and IKE Authentication (IKE_AUTH) exchanges. These initial exchanges normally consist of four messages, though in some scenarios that number can grow. All communications using IKE consist of request/response pairs. The first pair of messages (IKE_SA_INIT) negotiate cryptographic algorithms, exchange nonces, and do a Diffie-Hellman exchange. The second pair of messages (IKE_AUTH) authenticate the previous messages, exchange identities and certificates, and establish the first Child SA.

Redundant or duplicated SAs may be created e.g., when two ends initialize an IKE session at the same time (for example, as a result of two ends finishing IKE configuration and triggering initialization simultaneously, or due to Dead Peer Detect (DPD)). According to RFC 7296, when there are two SAs eligible to receive packets, a node MUST accept incoming packets through either SA. Therefore, redundant IKE SAs could lead to very serious results. For example, IPsec traffic could be broken completely if it enters a wrong tunnel.

US 2007/157305 A1 describes a method for controlling the number of Internet Protocol Security (IPsec) security associations per Internet Key Exchange (IKE) security associations for a single user.

US 2003/237003 A1 describes a method for recovering from the reset of and Internet Key Exchange (IKE) node involved in secure IPSec communication with one or more peer IKE nodes, which comprises generating an ISAKMP phase 1 SA delete message using SA data and transmitting the delete message by deleting the corresponding phase 1 SA.

### SUMMARY

It is an object of the present disclosure to provide communication devices and methods therein, capable of solving, or at least mitigating, the above problem.

According to a first aspect of the present disclosure, a method performed by a first communication device is provided. The method includes: transmitting, to a second communication device, a first IKE_AUTH request; receiving, from the second communication device, a second IKE_AUTH request; transmitting, to the second communication device in response to the second IKE_AUTH request, a second IKE_AUTH response; and receiving, from the second communication device, a first IKE_AUTH response as a response to the first IKE_AUTH request. The first IKE_AUTH request and/or the second IKE_AUTH response contains a notification indicating a first policy supported by the first communication device for identifying duplicated IKE SAs, and the second IKE_AUTH request and/or the first IKE_AUTH response contains a notification indicating a second policy supported by the second communication device for identifying duplicated IKE SAs.

In an embodiment, the first policy may indicate identifying duplicated IKE SAs based on one or more of: IP addresses, device identities (IDs), or child SAs.

In an embodiment, the second policy may indicate identifying duplicated IKE SAs based on one or more of: IP addresses, device IDs, or child SAs.

In an embodiment, the method may further include: identifying a first IKE SA created in association with the first IKE_AUTH request and a second IKE SA created in association with the second IKE_AUTH request as duplicated IKE SAs, in accordance with a policy supported by both the first communication device and the second communication device for identifying duplicated IKE SAs as derived from the first policy and the second policy.

In an embodiment, the first policy may further indicate a first maximum allowable number of duplicated IKE SAs, and the second policy may further indicate a second maximum allowable number of duplicated IKE SAs.

In an embodiment, the method may further include, when a smaller one of the first maximum allowable number and the second maximum allowable number is reached: determining the first IKE SA or the second IKE SA as unusable, or initiating deletion of the first IKE SA.

In an embodiment, the first IKE SA may be determined as unusable or the deletion of the first IKE SA is initiated when a minimum value among a first nonce value contained in a first IKE_SA_INIT request from the first communication device to the second communication device, a second nonce value contained in a second IKE_SA_INIT request from the second communication device to the first communication device, a third nonce value contained in a second IKE_SA_INIT response from the first communication device to the second communication device as a response to the second IKE_SA_INIT request, and a fourth nonce value contained in a first IKE_SA_INIT response from the second communication device to the first communication device as a response to the first IKE_SA_INIT request is the first nonce value or the third nonce value, or the second IKE SA may be determined as unusable when the minimum value is the second nonce value or the fourth nonce value.

According to a second aspect of the present disclosure, a first communication device is provided. The first communication device includes a communication interface, a processor and a memory. The memory contains instructions executable by the processor whereby the first communication device is operative to perform the method according to the above first aspect.

According to a third aspect of the present disclosure, a computer program is provided. The computer program contains instructions which, when executed by a processor of a first communication device, configure the first communication device to perform the method according to the above first aspect.

According to a fourth aspect of the present disclosure, a computer-readable storage medium is provided. The computer-readable storage medium has computer-readable instructions stored thereon. The computer-readable instructions, when executed by a processor of a first communication device, configuring the first communication device to perform the method according to the above first aspect.

With the embodiments of the present disclosure, in IKE_AUTH Exchanges between a first communication device and a second communication device, an IKE_AUTH request or response from the first communication device to the second communication device can contain a policy supported by the first communication device for identifying duplicated or redundant IKE SAs, and an IKE_AUTH request or response from the second communication device to the first communication device can contain a policy supported by the second communication device for identifying duplicated or redundant IKE SAs. In this way, the first communication device and the second communication device are enabled to identify duplicated or redundant IKE SAs properly.

### BRIEF DESCRIPTION OF THE DRAWINGS

The above and other objects, features and advantages will be more apparent from the following description of embodiments with reference to the figures, in which:
Fig. 1 is a sequence diagram showing message exchanges for IKE communication;
Fig. 2 is a schematic diagram showing a problem caused by redundant IKE SAs;
Figs. 3A and 3B are schematic diagrams showing an environment where creation of redundant IKE SAs may be triggered by DPD;
Fig. 4 is a flowchart illustrating a method according to an embodiment of the present disclosure;
Figs. 5A and 5B show a message format of a notify message according to an embodiment of the present disclosure;
Fig. 6 is a sequence diagram showing a process of deleting a redundant IKE SA; and
Fig. 7 is a block diagram of a first communication device according to an embodiment of the present disclosure.

### DETAILED DESCRIPTION

As used herein, the term "communication device" refers to any device or node in a wired or wireless communication network. For example, a communication device may be a network device or node, such as an access network node or a core network node. Alternatively, a communication device may be a terminal device, such as a User Equipment (UE), that can access a communication network.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms. The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

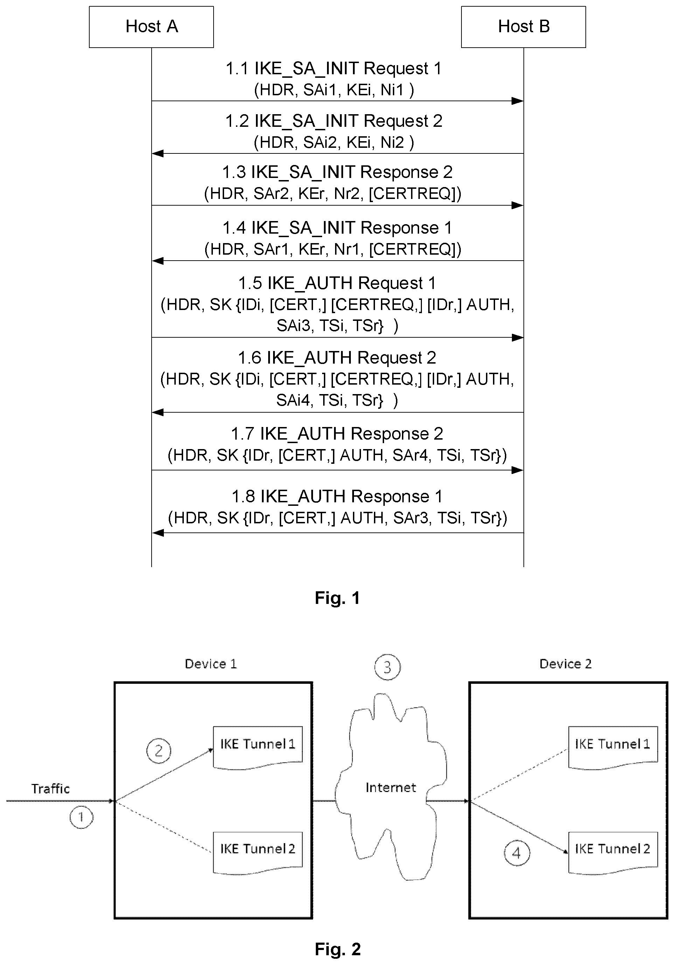

Fig. 1 is a sequence diagram showing message exchanges for IKE communication, including IKE_SA_INIT Exchanges and IKE_AUTH Exchanges, which may result in redundant IKE SAs. The payloads contained in the message are indicated by names as listed below.

| Notation | Payload |
|---|---|
| AUTH | Authentication |
| CERT | Certificate |
| CERTREQ | Certificate Request |
| CP | Configuration |
| D | Delete |
| EAP | Extensible Authentication |
| HDR | IKE header (not a payload) |
| IDi | Identification - Initiator |
| IDr | Identification - Responder |
| KE | Key Exchange |
| Ni, Nr | Nonce |
| N | Notify |
| SA | Security Association |
| SK | Encrypted and Authenticated |
| TSi | Traffic Selector - Initiator |
| TSr | Traffic Selector - Responder |
| V | Vendor ID |

At 1.1, Host A sends an IKE_SA_INIT request (IKE_SA_INIT Request 1) to Host B, containing HDR, SAi1, KEi, Ni1. Here, HDR contains the Security Parameter Indexes (SPIs), version numbers, Exchange Type, Message ID, and flags of various sorts. The SAi1 payload states the cryptographic algorithms Host A supports for the IKE SA. The KE payload sends Host A's Diffie-Hellman value. Ni1 is Host A's nonce.

At 1.2, Host B sends an IKE_SA_INIT request (IKE_SA_INIT Request 2) to Host A, containing HDR, SAi2, KEi, Ni2. Here, HDR contains the SPIs, version numbers, Exchange Type, Message ID, and flags of various sorts. The SAi2 payload states the cryptographic algorithms Host B supports for the IKE SA. The KE payload sends Host B's Diffie-Hellman value. Ni2 is Host B's nonce.

At 1.3, Host A sends an IKE_SA_INIT response (IKE_SA_INIT Response 2) to Host B as a response to IKE_SA_INIT Request 2, containing HDR, SAr2, KEr, Nr2, [CERTREQ] (payloads that may optionally appear will be shown in brackets, and [CERTREQ] indicates that a Certificate Request payload can optionally be included). Here, Host A chooses a cryptographic suite from Host B's offered choices and expresses that choice in the SAr2 payload, completes the Diffie-Hellman exchange with the KEr payload, and sends its nonce in the Nr2 payload.

At 1.4, Host B sends an IKE_SA_INIT response (IKE_SA_INIT Response 1) to Host A as a response to IKE_SA_INIT Request 1, containing HDR, SAr1, KEr, Nr1, [CERTREQ]. Here, Host B chooses a cryptographic suite from Host A's offered choices and expresses that choice in the SAr1 payload, completes the Diffie-Hellman exchange with the KEr payload, and sends its nonce in the Nr1 payload.

At 1.5, Host A sends an IKE_AUTH request (IKE_AUTH Request 1) to Host B, containing HDR, SK {IDi, [CERT,] [CERTREQ,] [IDr,] AUTH, SAi3, TSi, TSr}. Here, Host A asserts its identity with the IDi payload, proves knowledge of the secret corresponding to IDi and integrity protects the contents of the first message using the AUTH payload. It might also send its certificate(s) in CERT payload(s) and a list of its trust anchors in CERTREQ payload(s). If any CERT payloads are included, the first certificate provided must contain the public key used to verify the AUTH field. The optional payload IDr enables Host A to specify to which of Host B's identities it wants to talk. This is useful when the machine on which Host B is running is hosting multiple identities at the same IP address. If the IDr proposed by Host A is not acceptable to Host B, Host B might use some other IDr to finish the exchange. If Host A then does not accept the fact that Host B used an IDr different than the one that was requested, Host A can close the SA after noticing the fact. Two Traffic Selector (TS) payloads, TSi and TSr, are also included. Host A begins negotiation of a Child SA using the SAi3 payload.

At 1.6, Host B sends an IKE_AUTH request (IKE_AUTH Request 2) to Host A, containing HDR, SK {IDi, [CERT,] [CERTREQ,] [IDr,] AUTH, SAi4, TSi, TSr}. Here, Host B asserts its identity with the IDi payload, proves knowledge of the secret corresponding to IDi and integrity protects the contents of the first message using the AUTH payload. It might also send its certificate(s) in CERT payload(s) and a list of its trust anchors in CERTREQ payload(s). If any CERT payloads are included, the first certificate provided must contain the public key used to verify the AUTH field. The optional payload IDr enables Host B to specify to which of Host A's identities it wants to talk. This is useful when the machine on which Host A is running is hosting multiple identities at the same IP address. If the IDr proposed by Host B is not acceptable to Host A, Host A might use some other IDr to finish the exchange. If Host B then does not accept the fact that Host A used an IDr different than the one that was requested, Host B can close the SA after noticing the fact. Two TS payloads, TSi and TSr, are also included. Host B begins negotiation of a Child SA using the SAi4 payload.

At 1.7, Host A sends an IKE_AUTH response (IKE_AUTH Response 2) to Host B as a response to IKE_AUTH Request 2, containing HDR, SK {IDr, [CERT,] AUTH, SAr4, TSi, TSr}. Here, Host A asserts its identity with the IDr payload, optionally sends one or more certificates (again with the certificate containing the public key used to verify AUTH listed first), authenticates its identity and protects the integrity of the second message with the AUTH payload, and completes negotiation of a Child SA.

At 1.8, Host B sends an IKE_AUTH response (IKE_AUTH Response 1) to Host A as a response to IKE_AUTH Request 1, containing HDR, SK {IDr, [CERT,] AUTH, SAr3, TSi, TSr}. Here, Host B asserts its identity with the IDr payload, optionally sends one or more certificates (again with the certificate containing the public key used to verify AUTH listed first), authenticates its identity and protects the integrity of the second message with the AUTH payload, and completes negotiation of a Child SA.

Then, Host A and Host B perform CREATE_CHILD_SA exchanges for creating new Child SAs. For further details, reference can be made to RFC 7296.

As a result of the sequence of messages as described above in connection with Fig. 1, redundant IKE SAs are generated, which could lead to very serious results. For example, IPsec traffic could be broken completely if it enters a wrong tunnel, as shown in Fig. 2. As shown, at step 1, IP traffic (packets) reaches Device 1. Assuming here that IKE Tunnel 1 and IKE Tunnel 2 are redundant (i.e., IKE SA1 associated with IKE Tunnel 1 and IKE SA2 associated with IKE Tunnel 2 are redundant), IKE Tunnel 1 and IKE Tunnel 2 have the same child SAs and the same TSs. Therefore, it is possible for the traffic to enter either tunnel. At step 2, assuming that the traffic enters Tunnel 1, and accordingly the traffic is encrypted with Child SA 1 associated with Tunnel 1, and the outer IP address of the tunnel is encapsulated with the IP address of Tunnel 1. At step 3, the traffic passes the Internet. At step 4, when the traffic reaches Device 2, it needs to select which IKE tunnel to enter. However, the IP addresses of the two IKE tunnels are the same, and thus the traffic may not be correctly sent to Tunnel1. If the traffic enters Tunnel 2, the packet cannot be decrypted and the traffic flow will be completely interrupted.

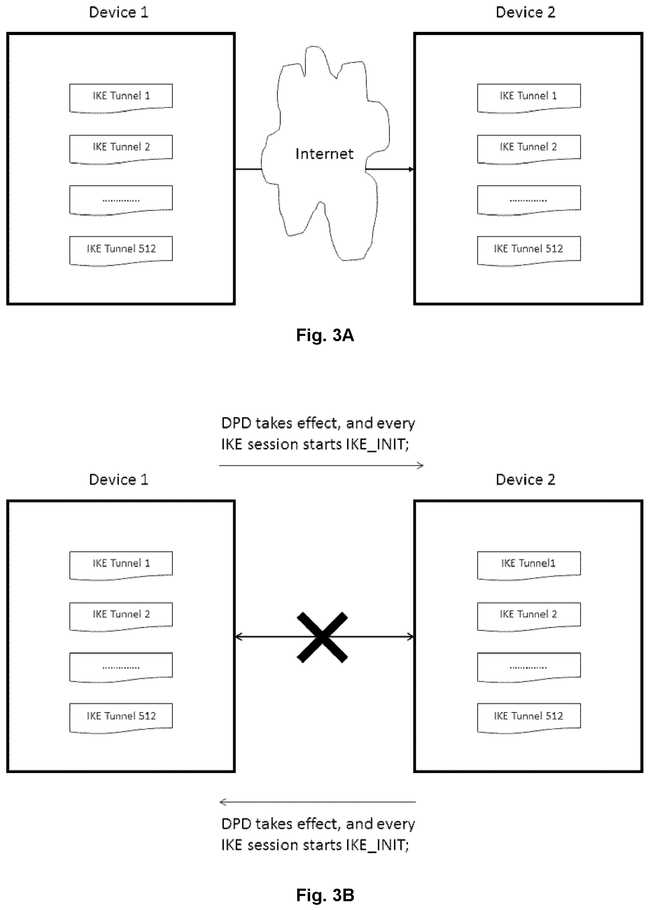

There may be several scenarios that can trigger creation of redundant IKE SAs, including e.g., initiation of configuration and triggering of IKE session negotiation simultaneously at both ends, or DPD. It may be rare for both ends to complete the configuration and trigger IKE session negotiation at the same time, even when the scale between the two devices is very large. However, the probability of creation of redundant IKE SAs caused by DPD could be very high at a large scale. The process is described with reference to Figs. 3A and 3B. In an exemplary environment, 512 IKE sessions are deployed between a pair of devices (Device 1 and Device 2), and every IKE session has 5 pairs of child SAs. Initially, all the IKE SAs and child SAs are established and everything goes well, as shown in Fig. 3A. Then, the link between the two devices is broken for some reason (which is not uncommon in real networks) and DPD takes effects. The behavior of DPD is defined as automatic reconnection after detecting a peer failure, which is reasonable in order to automatically recover from link failure. Therefore, the 512 sessions between both devices are constantly trying to reconnect with the peer, i.e., trying to send IKE_INIT messages, as shown in Fig. 3B. In this case, if the connection is recovered and IKE_INIT messages between the two devices can reach each other, both ends have a high probability to negotiate IKE SAs at the same time, resulting in redundant IKE SAs.

In theory, there is an SPI corresponding to a child SA in an ESP header of an IPsec packet. In the case of redundant IKE SAs, the correct child SA can be determined based on the SPI. However, there are two problems. This approach is more like a workaround and does not fundamentally solve the problem. Redundant IKE SAs exists all the time, which may lead to many unpredictable problems. Moreover, redundant IKE SAs occupy system resources. In the case of a large-scale network, such costs are not trivial.

In addition, RFC 7296 defines an INITIAL_CONTACT notify message type, but the INITIAL_CONTACT notification, if sent, MUST be in the first IKE_AUTH request or response, not as a separate exchange afterwards. Receiving parties MAY ignore it in other messages (quote from RFC 7296 section 2.4). Hence, the INITIAL_CONTACT notification doesn't take effect because the redundant IKE SAs are not established yet when the first IKE_AUTH message is received, and the INITIAL_CONTACT notify message type cannot remove the redundant IKE SAs.

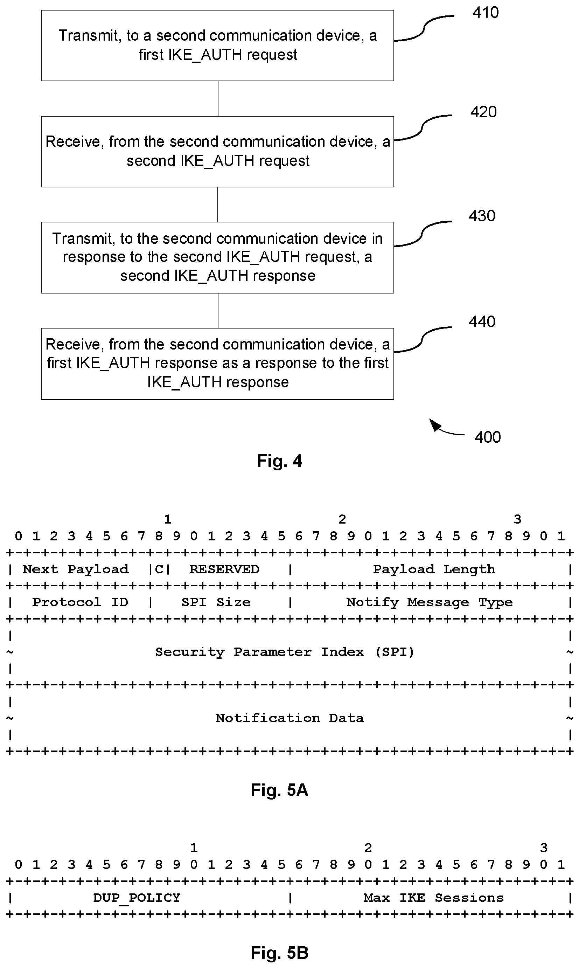

Fig. 4 is a flowchart illustrating a method 400 according to an embodiment of the present disclosure. The method 400 can be performed by a first communication device, e.g., Host A or Host B shown in Fig. 1.

At block 410, the first communication device transmits, to a second communication device, a first IKE_AUTH request (e.g., IKE_AUTH Request 1 in Fig. 1).

At block 420, the first communication device receives, from the second communication device, a second IKE_AUTH request (e.g., IKE_AUTH Request 2 in Fig. 1).

At block 430, the first communication device transmits, to the second communication device in response to the second IKE_AUTH request, a second IKE_AUTH response (e.g., IKE_AUTH Response 2 in Fig. 1).

At block 440, the first communication device receives, from the second communication device, a first IKE_AUTH response (e.g., IKE_AUTH Response 1 in Fig. 1) as a response to the first IKE_AUTH request.

Here, the first IKE_AUTH request and/or the second IKE_AUTH response contains a notification indicating a first policy supported by the first communication device for identifying duplicated (or redundant) IKE SAs, and the second IKE_AUTH request and/or the first IKE_AUTH response contains a notification indicating a second policy supported by the second communication device for identifying duplicated (or redundant) IKE SAs.

In an example, the first policy may indicate identifying duplicated IKE SAs based on one or more of: IP addresses (e.g., IP addresses of Host A and Host B in Fig. 1), device IDs (e.g., IDs of Host A and Host B in Fig. 1, i.e., IDi and IDr in IKE_AUTH Request 1, IKE_AUTH Request 2, IKE_AUTH Response 1, and IKE_AUTH Response 2), or child SAs (e.g., child SAs, or TSi and TSr, created by Host A and Host B in Fig. 1). Similarly, the second policy may indicate identifying duplicated IKE SAs based on one or more of: IP addresses, device IDs, or child SAs.

In an example, the first policy may further indicate a first maximum allowable number of duplicated IKE SAs, and the second policy may further indicate a second maximum allowable number of duplicated IKE SAs.

Figs. 5A and 5B show a message format of a notify message for carrying the above notification. Here, a Notify Message Type DUPLICATED_SA_MANAGEMENT_SUPPORTED is defined, as follows:

| | |
|---|---|
| Value | Notify Message Type |
| 16447 | DUPLICATED_SA_MANAGEMENT_SUPPORTED |

The fields in Fig. 5A can be defined as follows:
- Next Payload - N(41), indicates this is Notify payload;
- C=0 - recipient to skip this payload if it does not understand the payload type code;
- Protocol ID - this field must contain either (2) to indicate AH or (3) to indicate ESP;
- SPI Size - length in octets of the child SA SPI;
- Notify Message Type - DUPLICATED_SA_MANAGEMENT_SUPPORTED (16447)
- Notification data for DUPLICATED_SA_MANAGEMENT_SUPPORTED - 4 octets, as shown in Fig. 5B.

The notification data, as shown in Fig. 5B, contains:
- DUP_POLICY - defines how to identify duplicated IKE SAs, e.g., in the following bitmap:
   -- 1 <<0 - Using IP addresses to identify duplicated IKE SAs (where << is a left shift operator);
   -- 1 <<1 - Using device IDs (node IDs) to identify duplicated IKE SAs;
   -- 1 <<2 - Using child SAs (TSs) to identify duplicated IKE SAs. (These bits can be used in combination. For example, if DUP_POLICY field is set to 1<<1, or value 2, then only the device IDs (e.g., IDi and IDr in the IKE_AUTH messages) are compared to identify duplicated IKE SAs. If DUP_POLICY is set to 1 <<1 and 1<<2, or value 6, then both the device IDs and the child SAs are compared to identify duplicated IKE SAs, i.e., IKE SAs will be identified as duplicated only when they have the same IDi/IDr and the same child SAs. Which one or combination of the policies is to be used may depend on a network deployment or configuration. For example, the policy based on IP addresses or IDs may be used when one of two nodes in negotiation is a gateway and the other one is a client, or the policy based on child SAs may be used when both nodes in negotiation are gateways.)
- Max IKE Sessions - indicates how many IKE sessions (IKE SAs) are allowed even if they are duplicated (in some cases it may be desired to have duplicated IKE sessions, e.g., when a same certificate is used to establish different IKE SAs).

For example, IKE_AUTH Request 1 in Fig. 1 can be extended to contain: HDR, SK {IDi, [CERT,] [CERTREQ,] N[DUPLICATED_SA_MANAGEMENT_SUPPORTED], [IDr,] AUTH, SAi3, TSi, TSr}. Additionally or alternatively, IKE_AUTH Response 2 in Fig. 1 can be extended to contain: HDR, SK {IDr, [CERT,] AUTH, N[DUPLICATED_SA_MANAGEMENT_SUPPORTED], SAr4, TSi, TSr}. For example, IKE_AUTH Request 2 in Fig. 1 can be extended to contain: HDR, SK {IDi, [CERT,] [CERTREQ,] N[DUPLICATED_SA_MANAGEMENT_SUPPORTED], [IDr,] AUTH, SAi4, TSi, TSr}. Additionally or alternatively, IKE_AUTH Response 1 in Fig. 1 can be extended to contain: HDR, SK {IDr, [CERT,] AUTH, N[DUPLICATED_SA_MANAGEMENT_SUPPORTED], SAr3, TSi, TSr}.

Then, the first communication device may identify a first IKE SA created in association with the first IKE_AUTH request and a second IKE SA created in association with the second IKE_AUTH request as duplicated IKE SAs, in accordance with a policy supported by both the first communication device and the second communication device for identifying duplicated IKE SAs as derived from the first policy and the second policy.

Referring to Fig. 1 again for example, when IKE_AUTH Request 1 and/or IKE_AUTH Response 2 contains a notification N[DUPLICATED_SA_MANAGEMENT_SUPPORTED], and IKE_AUTH Request 2 and/or IKE_AUTH Response 1 contains a notification N[DUPLICATED_SA_MANAGEMENT_SUPPORTED], Host A knows the policy supported by Host B for identifying duplicated IKE SAs, and Host B knows the policy supported by Host A for identifying duplicated IKE SAs. In this case, each of Host A and Host B can derive a policy supported by both ends for identifying duplicated IKE SAs. For example, when DUP_POLICY in IKE_AUTH Request 1 and/or IKE_AUTH Response 2 indicates that Host A supports identifying duplicated IKE SAs based on IP addresses and device IDs (DUP_POLICY=3), and DUP_POLICY in IKE_AUTH Request 2 and/or IKE_AUTH Response 1 indicates that Host B supports identifying duplicated IKE SAs based on device IDs and child SAs (DUP_POLICY=6), the policy supported by both ends as derived is to identify duplicated IKE SAs based on IDs. On the other hand, when neither of IKE_AUTH Request 1 and IKE_AUTH Response 2 contains a notification N[DUPLICATED_SA_MANAGEMENT_SUPPORTED], and/or neither of IKE_AUTH Request 2 and IKE_AUTH Response 1 contains a notification N[DUPLICATED_SA_MANAGEMENT_SUPPORTED], meaning that at least one of Host A and Host B does not support the above mechanism for identifying duplicated IKE SAs, Host A and Host B may not identify duplicated IKE SAs as described above.

Further, when the first IKE SA and the second IKE SA are identified as duplicated IKE SAs, and a smaller one of the first maximum allowable number (e.g., value of Max IKE Sessions in IKE_AUTH Request 1 and/or IKE_AUTH Response 2) and the second maximum allowable number (e.g., value of Max IKE Sessions in IKE_AUTH Request 2 and/or IKE_AUTH Response 1) is reached (if the first maximum allowable number and the second maximum allowable number are provided), the first communication device can determine the first IKE SA or the second IKE SA as unusable (e.g., obsolete), or initiate deletion of the first IKE SA. Here, for example, among a first nonce value contained in a first IKE_SA_INIT request from the first communication device to the second communication device (e.g., Ni1 in Fig. 1), a second nonce value contained in a second IKE_SA_INIT request from the second communication device to the first communication device (e.g., Ni2 in Fig. 1), a third nonce value contained in a second IKE_SA_INIT response from the first communication device to the second communication device as a response to the second IKE_SA_INIT request (e.g., Nr2 in Fig. 1), and a fourth nonce value contained in a first IKE_SA_INIT response from the second communication device to the first communication device as a response to the first IKE_SA_INIT request (e.g., Nr1 in Fig. 1), a minimum value can be calculated. The first IKE SA may be determined as unusable or the deletion of the first IKE SA may be initiated when the minimum value is the first nonce value or the third nonce value. The second IKE SA may be determined as unusable when the minimum value is the second nonce value or the fourth nonce value. Here, when the minimum value is the second nonce value or the fourth nonce value, the second communication device may initiate the deletion of the second IKE SA.

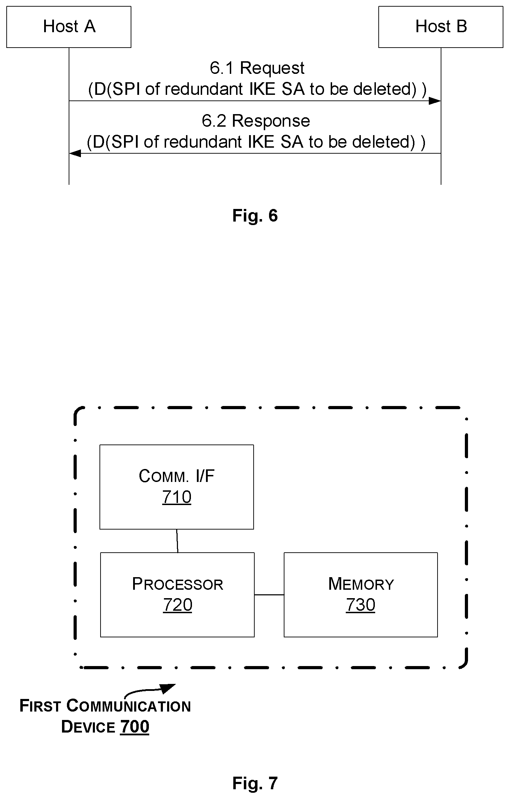

Fig. 6 shows a process for deleting a redundant IKE SA. As shown, at 6.1, Host A sends a request to Host B, requesting to delete a redundant IKE SA, with an SPI of the redundant IKE SA indicated. At 6.2, Host B sends a response to Host A, indicating the deletion of the redundant IKE SA. For further details, reference can be made to RFC 7296 and description thereof will be omitted here.

Fig. 7 is a block diagram of a first communication device 700 according to an embodiment of the present disclosure.

The first communication device 700 includes a communication interface 710, a processor 720 and a memory 730. The memory 730 may contain instructions executable by the processor 720 whereby the first communication device 700 is operative to perform the actions, e.g., of the procedure described earlier in conjunction with Fig. 4. Particularly, the memory 730 may contain instructions executable by the processor 720 whereby the first communication device 700 is operative to: transmit, to a second communication device, a first IKE_AUTH request; receive, from the second communication device, a second IKE_AUTH request; transmit, to the second communication device in response to the second IKE_AUTH request, a second IKE_AUTH response; and receive, from the second communication device, a first IKE_AUTH response as a response to the first IKE_AUTH request. The first IKE_AUTH request and/or the second IKE_AUTH response contains a notification indicating a first policy supported by the first communication device for identifying duplicated IKE SAs, and the second IKE_AUTH request and/or the first IKE_AUTH response contains a notification indicating a second policy supported by the second communication device for identifying duplicated IKE SAs.

In an embodiment, the first policy may indicate identifying duplicated IKE SAs based on one or more of: IP addresses, device IDs, or child SAs.

In an embodiment, the second policy may indicate identifying duplicated IKE SAs based on one or more of: IP addresses, device IDs, or child SAs.

In an embodiment, the memory 730 may further contain instructions executable by the processor 720 whereby the first communication device 700 is operative to: identify a first IKE SA created in association with the first IKE_AUTH request and a second IKE SA created in association with the second IKE_AUTH request as duplicated IKE SAs, in accordance with a policy supported by both the first communication device and the second communication device for identifying duplicated IKE SAs as derived from the first policy and the second policy.

In an embodiment, the first policy may further indicate a first maximum allowable number of duplicated IKE SAs, and the second policy may further indicate a second maximum allowable number of duplicated IKE SAs.

In an embodiment, the memory 730 may further contain instructions executable by the processor 720 whereby the first communication device 700 is operative to, when a smaller one of the first maximum allowable number and the second maximum allowable number is reached: determining the first IKE SA or the second IKE SA as unusable, or initiating deletion of the first IKE SA.

In an embodiment, the first IKE SA may be determined as unusable or the deletion of the first IKE SA is initiated when a minimum value among a first nonce value contained in a first IKE_SA_INIT request from the first communication device to the second communication device, a second nonce value contained in a second IKE_SA_INIT request from the second communication device to the first communication device, a third nonce value contained in a second IKE_SA_INIT response from the first communication device to the second communication device as a response to the second IKE_SA_INIT request, and a fourth nonce value contained in a first IKE_SA_INIT response from the second communication device to the first communication device as a response to the first IKE_SA_INIT request is the first nonce value or the third nonce value, or the second IKE SA may be determined as unusable when the minimum value is the second nonce value or the fourth nonce value.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by the processor 720 causes the first communication device 700 to perform the actions, e.g., of the procedure described earlier in conjunction with Fig. 4.

The computer program product may be configured as a computer program code structured in computer program modules. The computer program modules could essentially perform the actions of the flow illustrated in Fig. 4.

The processor may be a single CPU (Central Processing Unit), but could also comprise two or more processing units. For example, the processor may include general purpose microprocessors; instruction set processors and/or related chips sets and/or special purpose microprocessors such as Application Specific Integrated Circuits (ASICs). The processor may also comprise board memory for caching purposes. The computer program may be carried in a computer program product connected to the processor. The computer program product may comprise a non-transitory computer readable storage medium on which the computer program is stored. For example, the computer program product may be a flash memory, a Random Access Memory (RAM), a Read-Only Memory (ROM), or an EEPROM, and the computer program modules described above could in alternative embodiments be distributed on different computer program products in the form of memories.

## Claims

1. A method (400) performed by a first communication device, comprising:
transmitting (410), to a second communication device, a first Internet Key Exchange, IKE, Authentication, IKE_AUTH, request;
receiving (420), from the second communication device, a second IKE_AUTH request;
transmitting (430), to the second communication device in response to the second IKE_AUTH request, a second IKE_AUTH response; and
receiving (440), from the second communication device, a first IKE_AUTH response as a response to the first IKE_AUTH request,
wherein the first IKE_AUTH request and/or the second IKE_AUTH response contains a notification indicating a first policy supported by the first communication device for identifying duplicated IKE Security Associations, SAs, and the second IKE_AUTH request and/or the first IKE_AUTH response contains a notification indicating a second policy supported by the second communication device for identifying duplicated IKE SAs, thereby enabling creation of a policy supported by both the first communication device and the second communication device for identifying duplicated IKE SAs based on the first policy and the second policy.

2. The method (400) of claim 1, wherein the first policy indicates identifying duplicated IKE SAs based on one or more of:
Internet Protocol, IP, addresses,
device identities, IDs, or
child SAs.

3. The method (400) of claim 1 or 2, wherein the second policy indicates identifying duplicated IKE SAs based on one or more of:
IP addresses,
device IDs, or
child SAs.

4. The method (400) of any of claims 1 to 3, further comprising:
identifying a first IKE SA created in association with the first IKE_AUTH request and a second IKE SA created in association with the second IKE_AUTH request as duplicated IKE SAs, in accordance with a policy supported by both the first communication device and the second communication device for identifying duplicated IKE SAs as derived from the first policy and the second policy.

5. The method (400) of claim 4, wherein the first policy further indicates a first maximum allowable number of duplicated IKE SAs, and the second policy further indicates a second maximum allowable number of duplicated IKE SAs.

6. The method (400) of claim 5, further comprising, when a smaller one of the first maximum allowable number and the second maximum allowable number is reached:
determining the first IKE SA or the second IKE SA as unusable, or
initiating deletion of the first IKE SA.

7. The method (400) of claim 6, wherein
the first IKE SA is determined as unusable or the deletion of the first IKE SA is initiated when a minimum value among:
a first nonce value contained in a first IKE SA Initiation, IKE_SA_INIT, request from the first communication device to the second communication device,
a second nonce value contained in a second IKE_SA_INIT request from the second communication device to the first communication device,
a third nonce value contained in a second IKE_SA_INIT response from the first communication device to the second communication device as a response to the second IKE_SA_INIT request, and
a fourth nonce value contained in a first IKE_SA_INIT response from the second communication device to the first communication device as a response to the first IKE_SA_INIT request,
is the first nonce value or the third nonce value, or
the second IKE SA is determined as unusable when the minimum value is the second nonce value or the fourth nonce value.

8. A first communication device (700), comprising a communication interface (710), a processor (720) and a memory (730), the memory (730) comprising instructions executable by the processor (720) whereby the first communication device (700) is operative to perform the method according to any of claims 1-7.

9. A computer program comprising instructions which, when executed by a processor of a first communication device, configure the first communication device to perform the method according to any of claims 1-7.

10. A computer-readable storage medium having computer-readable instructions stored thereon, the computer-readable instructions, when executed by a processor of a first communication device, configuring the first communication device to perform the method according to any of claims 1-7.

## Patentansprüche

1. Verfahren (400), das von einer ersten Kommunikationsvorrichtung durchgeführt wird und Folgendes umfasst:
Senden (410) einer ersten Anforderung einer Internet-Schlüsselaustausch-,IKE-,Authentifizierung, IKE_AUTH, an eine zweite Kommunikationsvorrichtung;
Empfangen (420) einer zweiten IKE-AUTH-Anforderung von der zweiten Kommunikationsvorrichtung;
Senden (430) einer zweiten IKE _ AUTH-Antwort an die zweite Kommunikationsvorrichtung in Reaktion auf die zweite IKE_AUTH-Anforderung; und
Empfangen (440) einer ersten IKE_AUTH-Antwort von der zweiten Kommunikationsvorrichtung in Reaktion auf die erste IKE_AUTH-Anforderung,
wobei die erste IKE_AUTH-Anforderung und/oder die zweite IKE_AUTH-Antwort eine Benachrichtigung enthalten, die eine von der ersten Kommunikationsvorrichtung unterstützte erste Richtlinie zum Identifizieren duplizierter IKE-Sicherheitsvereinbarungen, SAs, angibt, und die zweite IKE_AUTH-Anforderung und/oder die erste IKE_AUTH-Antwort eine Benachrichtigung enthalten, die eine von der zweiten Kommunikationsvorrichtung unterstützte zweite Richtlinie zum Identifizieren duplizierter IKE-SAs angibt, um dadurch die Erstellung einer sowohl von der ersten Kommunikationsvorrichtung als auch der zweiten Kommunikationsvorrichtung unterstützten Richtlinie zum Identifizieren duplizierter IKE-SAs basierend auf der ersten Richtlinie und der zweiten Richtlinie zu ermöglichen.

2. Verfahren (400) nach Anspruch 1, wobei die erste Richtlinie Identifizieren duplizierter IKE-SAs basierend auf einem oder mehreren von Folgenden angibt:
Internetprotokolladressen, IP-Adressen,
Vorrichtungskennungen, Vorrichtungs-IDs, oder
untergeordneten SAs.

3. Verfahren (400) nach Anspruch 1 oder 2, wobei die zweite Richtlinie Identifizieren duplizierter IKE-SAs basierend auf einem oder mehreren von Folgenden angibt:
IP-Adressen,
Vorrichtungs-IDs oder
untergeordneten SAs.

4. Verfahren (400) nach einem der Ansprüche 1 bis 3, ferner umfassend:
Identifizieren einer in Verbindung mit der ersten IKE_AUTH-Anforderung erstellten ersten IKE-SA und einer in Verbindung mit der zweiten IKE_AUTH-Anforderung erstellten zweiten IKE-SA als duplizierte IKE-SAs gemäß einer sowohl von der ersten Kommunikationsvorrichtung als auch der zweiten Kommunikationsvorrichtung unterstützten Richtlinie zum Identifizieren duplizierter IKE-SAs, die von der ersten Richtlinie und der zweiten Richtlinie abgeleitet ist.

5. Verfahren (400) nach Anspruch 4, wobei die erste Richtlinie ferner eine maximal zulässige Anzahl von duplizierten IKE-SAs angibt und die zweite Richtlinie ferner eine zweite maximal zulässige Anzahl von duplizierten IKE-SAs angibt.

6. Verfahren (400) nach Anspruch 5, ferner umfassend, wenn eine kleinere der ersten maximal zulässigen Anzahl und der zweiten maximal zulässigen Anzahl erreicht wird:
Bestimmen der ersten IKE-SA oder der zweiten IKE-SA als unbrauchbar oder
Initiieren der Löschung der ersten IKE-SA.

7. Verfahren (400) nach Anspruch 6, wobei
die erste IKE-SA als unbrauchbar bestimmt wird oder die Löschung der ersten IKE-SA initiiert wird, wenn ein minimaler Wert unter
einem ersten Nonce-Wert, der in einer ersten IKE-SA-Initiierungsanforderung, IKE_SA_INIT-Anforderung, von der ersten Kommunikationsvorrichtung an die zweite Konfigurationsvorrichtung enthalten ist,
einem zweiten Nonce-Wert, der in einer zweiten IKE_SA_INIT-Anforderung von der zweiten Kommunikationsvorrichtung an die erste Konfigurationsvorrichtung enthalten ist,
einem dritten Nonce-Wert, der in einer zweiten IKE_SA_INIT-Antwort von der ersten Kommunikationsvorrichtung an die zweite Konfigurationsvorrichtung als eine Antwort auf die zweite IKE_SA_INIT-Anforderung enthalten ist, und einem vierten Nonce-Wert, der in einer ersten IKE_SA_INIT-Antwort von der zweiten Kommunikationsvorrichtung an die erste Konfigurationsvorrichtung als eine Antwort auf die erste IKE_SA_INIT-Anforderung enthalten ist,
der erste Nonce-Wert oder der dritte Nonce-Wert ist oder
die zweite IKE-SA als unbrauchbar bestimmt wird, wenn der minimale Wert der zweite Nonce-Wert oder der vierte Nonce-Wert ist.

8. Erste Kommunikationsvorrichtung (700), umfassend eine Kommunikationsschnittstelle (710), einen Prozessor (720) und einen Speicher (730), wobei der Speicher (730) Anweisungen umfasst, die von dem Prozessor (720) ausgeführt werden können, wodurch die Kommunikationsvorrichtung (700) zum Durchführen des Verfahrens nach einem der Ansprüche 1-7 ausgelegt ist.

9. Computerprogramm, umfassend Anweisungen, die bei Ausführung durch einen Prozessor einer ersten Kommunikationsvorrichtung die erste Kommunikationsvorrichtung zum Durchführen des Verfahrens nach einem der Ansprüche 1-7 konfigurieren.

10. Computerlesbares Speichermedium mit darauf gespeicherten computerlesbaren Anweisungen, wobei die computerlesbaren Anweisungen bei Ausführung durch einen Prozessor einer ersten Kommunikationsvorrichtung die erste Kommunikationsvorrichtung zum Durchführen des Verfahrens nach einem der Ansprüche 1-7 konfigurieren.

## Revendications

1. Procédé (400) réalisé par un premier dispositif de communication, comprenant :
la transmission (410), à un deuxième dispositif de communication, d'une première demande Internet Key Exchange, IKE, Authentication, IKE_AUTH ;
la réception (420), depuis le deuxième dispositif de communication, d'une deuxième demande IKE_AUTH ;
la transmission (430), au deuxième dispositif de communication en réponse à la deuxième demande IKE_AUTH, d'une deuxième réponse IKE_AUTH ; et
la réception (440), depuis le deuxième dispositif de communication, d'une première réponse IKE_AUTH en tant qu'une réponse à la première demande IKE_AUTH,
dans lequel la première demande IKE_AUTH et/ou la deuxième réponse IKE_AUTH contiennent une notification indiquant une première politique prise en charge par le premier dispositif de communication pour identifier des associations de sécurité, SA, IKE dupliquées et la deuxième demande IKE_AUTH et/ou la première réponse IKE_AUTH contiennent une notification indiquant une deuxième politique prise en charge par le deuxième dispositif de communication pour identifier des SA IKE dupliquées, permettant ainsi une création d'une politique prise en charge à la fois par le premier dispositif de communication et par le deuxième dispositif de communication pour identifier des SA IKE dupliquées sur la base de la première politique et de la deuxième politique.

2. Procédé (400) selon la revendication 1, dans lequel la première politique indique l'identification de SA IKE dupliquées sur la base d'une ou plusieurs parmi :
des adresses de protocole Internet, IP,
des identités, ID, de dispositif, et
des SA enfants.

3. Procédé (400) selon la revendication 1 ou 2, dans lequel la deuxième politique indique l'identification de SA IKE dupliquées sur la base d'une ou plusieurs parmi :
des adresses IP,
des ID de dispositif, et
des SA enfants.

4. Procédé (400) selon l'une quelconque des revendications 1 à 3, comprenant en outre :
l'identification d'une première SA IKE créée en association avec la première demande IKE_AUTH et d'une deuxième SA IKE créée en association avec la deuxième demande IKE_AUTH en tant que SA IKE dupliquées, en fonction d'une politique prise en charge à la fois par le premier dispositif de communication et par le deuxième dispositif de communication pour identifier des SA IKE dupliquées en tant que dérivées de la première politique et de la deuxième politique.

5. Procédé (400) selon la revendication 4, dans lequel la première politique indique en outre un premier nombre admissible maximal de SA IKE dupliquées, et la deuxième politique indique en outre un deuxième nombre admissible maximal de SA IKE dupliquées.

6. Procédé (400) selon la revendication 5, comprenant en outre, lorsque le plus petit du premier nombre admissible maximal et du deuxième nombre admissible maximal est atteint :
la détermination que la première SA IKE ou la deuxième SA IKE est inutilisable, ou
l'initiation d'une suppression de la première SA IKE.

7. Procédé (400) selon la revendication 6, dans lequel
la première SA IKE est déterminée comme étant inutilisable ou la suppression de la première SA IKE est initiée lorsqu'une valeur minimale parmi :
une première valeur de nonce contenue dans une première demande IKE SA Initiation, IKE_SA_INIT, du premier dispositif de communication au deuxième dispositif de communication,
une deuxième valeur de nonce contenue dans une deuxième demande IKE_SA_INIT du deuxième dispositif de communication au premier dispositif de communication,
une troisième valeur de nonce contenue dans une deuxième réponse IKE_SA_INIT du premier dispositif de communication au deuxième dispositif de communication en tant qu'une réponse à la deuxième demande IKE_SA_INIT, et
une quatrième valeur de nonce contenue dans une première réponse IKE_SA_INIT du deuxième dispositif de communication au premier dispositif de communication en tant qu'une réponse à la première demande IKE_SA_INIT,
est la première valeur de nonce ou la troisième valeur de nonce, ou
la deuxième SA IKE est déterminée comme inutilisable lorsque la valeur minimale est la deuxième valeur de nonce ou la quatrième valeur de nonce.

8. Premier dispositif de communication (700), comprenant une interface de communication (710), un processeur (720) et une mémoire (730), la mémoire (730) comprenant des instructions exécutables par le processeur (720) selon lesquelles le premier dispositif de communication (700) est fonctionnel pour réaliser le procédé selon l'une quelconque des revendications 1 à 7.

9. Programme informatique comprenant des instructions qui, lorsqu'elles sont exécutées par un processeur d'un premier dispositif de communication, configurent le premier dispositif de communication pour réaliser le procédé selon l'une quelconque des revendications 1 à 7.

10. Support de stockage lisible par ordinateur sur lequel sont stockées des instructions lisibles par ordinateur qui, lorsqu'elles sont exécutées par un processeur d'un premier dispositif de communication, configurent le premier dispositif de communication pour réaliser le procédé selon l'une quelconque des revendications 1 à 7.
